# EUROPÄISCHE PATENTANMELDUNG

(11) **EP 3 354 443 A1**
(43) Veröffentlichungstag der Anmeldung: **01.08.2018**
(21) Anmeldenummer: 17176953.2
(22) Anmeldetag: 20.06.2017
(51) Int. Cl.: B29C 64/30, B29C 64/20, B33Y 40/00

(54) **VORRICHTUNG UND VERFAHREN ZUR ADDITIVEN HERSTELLUNG DREIDIMENSIONALER OBJEKTE**

(30) Priorität: 27.01.2017 DE 102017101636
(71) Anmelder: CL Schutzrechtsverwaltungs GmbH, 96215 Lichtenfels (DE)
(72) Erfinder: ZEULNER, Fabian, 96215 Lichtenfels (DE)
(74) Vertreter: Kohl, Fabian Hanno

(57) **Zusammenfassung**

Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls (4) verfestigbaren Baumaterial (3), umfassend eine Autorisierungseinrichtung (11), welche zur Autorisierung wenigstens eines Benutzers (12) der Vorrichtung (1) zur Nutzung wenigstens eines Betriebszustands der Vorrichtung (1) eingerichtet ist, wobei die Autorisierungseinrichtung (11) wenigstens eine Erfassungseinrichtung (14) umfasst, welche zur Erfassung wenigstens eines akustischen Merkmals, optischen Merkmals oder Körpermerkmals eines potentiellen Benutzers (12) der Vorrichtung (1) eingerichtet ist.

## Beschreibung

Die Erfindung betrifft eine Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial, umfassend eine Autorisierungseinrichtung, welche zur Autorisierung wenigstens eines Benutzers der Vorrichtung zur Nutzung wenigstens eines Betriebszustands der Vorrichtung eingerichtet ist.

Derartige Vorrichtungen zur additiven Herstellung dreidimensionaler Objekte sind an und für sich bekannt. Vermittels entsprechenden Vorrichtungen werden herzustellende dreidimensionale Objekte durch sukzessives schichtweises selektives Belichten und damit einhergehendes sukzessives schichtweises selektives Verfestigen von Baumaterialschichten in den dem schichtbezogenen Querschnitt des herzustellenden Objekts entsprechenden Bereichen aus einem vermittels eines Energiestrahls verfestigbaren Baumaterial additiv aufgebaut.

Es ist ferner bekannt, dass entsprechende Vorrichtungen eine Autorisierungseinrichtung, welche zur Autorisierung wenigstens eines Benutzers der Vorrichtung zur Nutzung wenigstens eines Betriebszustands der Vorrichtung eingerichtet ist, umfassen. Die Autorisierung jeweiliger Benutzer der Vorrichtung erfolgt bis dato typischerweise über die benutzerseitige Eingabe eines bestimmten Kennworts an einer vorrichtungsseitigen Benutzerschnittstelle.

Dies stellt einen verbesserungswürdigen Zustand dar; insbesondere deshalb, als sich auf der Benutzerschnittstelle Baumaterialpartikel ablagern können, sodass der Benutzer bei der zur Autorisierung erforderlichen Eingabe eines Kennworts mit Baumaterial in Berührung kommen kann. Aus sicherheitstechnischen Aspekten ist jedweder Kontakt eines Benutzers mit Baumaterial grundsätzlich möglichst zu vermeiden.

Der Erfindung liegt damit die Aufgabe zugrunde, eine, insbesondere im Hinblick auf eine Autorisierung eines Benutzers, bei welcher ein Benutzer nicht bzw. möglichst wenig in Kontakt mit Baumaterial kommt, verbesserte Vorrichtung zur additiven Herstellung dreidimensionaler Objekte anzugeben.

Die Aufgabe wird durch eine Vorrichtung zur additiven Herstellung dreidimensionaler Objekte gemäß Anspruch 1 gelöst. Die hierzu abhängigen Ansprüche betreffen mögliche Ausführungsformen der Vorrichtung.

Die hierin beschriebene Vorrichtung ("Vorrichtung") ist zur additiven Herstellung dreidimensionaler Objekte, d. h. beispielsweise technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial in den dem schichtbezogenen Querschnitt des herzustellenden Objekts entsprechenden Bereichen in eingerichtet. Bei dem Baumaterial kann es sich um ein partikuläres bzw. pulverförmiges Metall-, Kunststoff- und/oder Keramikmaterial handeln. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten des additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein. Denkbar ist es auch, dass die Vorrichtung als SEBS-Vorrichtung, d. h. als Vorrichtung zur Durchführung selektiver Elektronenstrahlschmelzverfahren (SEBS-Verfahren), ausgebildet ist.

Die Vorrichtung umfasst die zur Durchführung additiver Bauvorgänge typischerweise erforderlichen Funktionskomponenten. Hierzu zählen insbesondere eine Beschichtungseinrichtung und eine Belichtungseinrichtung. Die Beschichtungseinrichtung ist zur Ausbildung selektiv zu belichtender bzw. selektiv zu verfestigender Baumaterialschichten in einer Bauebene bzw. einem Baufeld der Vorrichtung, in welcher bzw. in welchem die sukzessive schichtweise selektive Belichtung und die damit einhergehende sukzessive schichtweise selektive Verfestigung von Baumaterialschichten aus dem vermittels eines Energiestrahls verfestigbaren Baumaterial erfolgt, eingerichtet. Die Belichtungseinrichtung ist zur selektiven Belichtung selektiv zu verfestigender Baumaterialschichten in der Bauebene der Vorrichtung eingerichtet.

Die Vorrichtung umfasst eine Autorisierungseinrichtung. Die hard- und/oder softwaremäßig implementierte Autorisierungseinrichtung ist zur Autorisierung wenigstens eines Benutzers der Vorrichtung zur Nutzung wenigstens eines Betriebszustands der Vorrichtung eingerichtet. Im Allgemeinen ist die Autorisierungseinrichtung sonach eingerichtet, Autorisierungsvorgänge durchzuführen. Ein jeweiliger Autorisierungsvorgang ermöglicht eine Autorisierung eines Benutzers, sodass dieser - nach erfolgreicher Autorisierung - wenigstens einen Betriebszustand der Vorrichtung nutzen kann. Entsprechende Autorisierungsvorgänge erhöhen die Betriebssicherheit der Vorrichtung, als derart nur autorisierten Benutzern der Vorrichtung die Möglichkeit gegeben wird, Betriebszustände der Vorrichtung zu nutzen.

Bei einem Betriebszustand der Vorrichtung kann es sich um die Inbetriebnahme der Vorrichtung, d. h. um ein Einschalten der Vorrichtung oder einer Funktionskomponente der Vorrichtung, die Außerbetriebnahme der Vorrichtung, d. h. um ein Ausschalten der Vorrichtung oder einer Funktionskomponente der Vorrichtung, oder um einen bestimmten Betriebsmodus der in Betrieb genommenen Vorrichtung handeln. Bei einem Betriebsmodus der Vorrichtung kann es sich z. B. um einen Demonstrations- bzw. Simulationsmodus, in welchem die Durchführung additiver Bauvorgänge nur demonstriert bzw. simuliert wird, additive Bauvorgänge jedoch tatsächlich nicht durchgeführt werden, einen Baumodus, in welchem additive Bauvorgänge tatsächlich durchgeführt werden, oder um einen Programmiermodus, in welchem wenigstens ein Betriebsparameter, d. h. z. B. ein Belichtungsparameter, wie etwa die Energiestrahlintensität, im Zusammenhang mit der Durchführung additiver Bauvorgänge programmierbar ist, handeln.

Die Autorisierungseinrichtung umfasst wenigstens eine Erfassungseinrichtung. Die hard- und/oder softwaremäßig implementierte Erfassungseinrichtung ist zur Erfassung wenigstens eines akustischen Merkmals, optischen Merkmals oder Körpermerkmals eines potentiellen Benutzers der Vorrichtung eingerichtet. Im Gegensatz zu dem eingangs beschriebenen Stand der Technik erfolgt eine Autorisierung sonach über die, wie sich im Weiteren ergibt, automatisierbare bzw. automatische Erfassung akustischer Merkmale und/oder optischer Merkmale und/oder weiterer Körpermerkmale eines potentiellen Benutzers der Vorrichtung. Autorisierungsvorgänge erfolgen sonach äußerst effizient auf Grundlage erfasster akustischer Merkmale und/oder optischer Merkmale und/oder weiterer Körpermerkmale eines potentiellen Benutzers der Vorrichtung. Ein (aktives) benutzerseitiges Handeln, d. h. insbesondere eine Eingabe eines bestimmten Kennworts an einer vorrichtungsseitigen Benutzerschnittstelle, ist typischerweise nicht notwendig. Ein potentieller Benutzer der Vorrichtung hat im Rahmen eines Autorisierungsvorgangs typischerweise keinen bzw., wenn überhaupt im Zusammenhang mit der Erfassung von Körpermerkmalen, einen im Vergleich nur minimalen (physikalischen) Kontakt mit der Vorrichtung; der potentielle Benutzer der Vorrichtung kommt im Rahmen eines Autorisierungsvorgangs sonach nicht bzw. kaum in Kontakt mit Baumaterial. Insofern liegt eine gegenüber dem eingangs beschriebenen Stand der Technik verbesserte Vorrichtung vor.

Die Erfassungseinrichtung kann als optische Erfassungseinrichtung, d. h. insbesondere als Bildaufnahmeeinrichtung, vorzugsweise als Kameraeinrichtung, ausgebildet sein oder eine solche umfassen. Eine optische Erfassungseinrichtung ist zur Erfassung wenigstens eines optischen Merkmals eines potentiellen Benutzers der Vorrichtung eingerichtet. Optische Merkmale eines potentiellen Benutzers der Vorrichtung sind insbesondere optisch erfassbare Merkmale bzw. eine optisch erfassbare Anordnung bestimmter optisch erfassbarer Merkmale des potentiellen Benutzers der Vorrichtung. Konkret kann es sich bei entsprechenden Merkmalen z. B. um Merkmale des Gesichts des Benutzers handeln. Die Erfassungseinrichtung bzw. die Autorisierungseinrichtung ist typischerweise mit geeigneten Algorithmen zur datenmäßigen Erfassung und Auswertung entsprechender optischer Merkmale ausgestattet.

Weiter kann die oder eine alternative bzw. ergänzende Erfassungseinrichtung als akustische Erfassungseinrichtung, insbesondere als Tonaufnahmeeinrichtung, vorzugsweise als Mikrophoneinrichtung, ausgebildet sein oder eine solche umfassen. Eine akustische Erfassungseinrichtung ist zur Erfassung wenigstens eines akustischen Merkmals eines potentiellen Benutzers der Vorrichtung eingerichtet. Akustische Merkmale eines potentiellen Benutzers der Vorrichtung sind insbesondere akustisch erfassbare Merkmale des potentiellen Benutzers der Vorrichtung. Konkret kann es sich bei entsprechenden Merkmalen z. B. um Merkmale der (ausgesprochenen) Sprache, d. h. insbesondere Amplitude, Frequenz, des Benutzers handeln. Die Erfassungseinrichtung bzw. die Autorisierungseinrichtung ist typischerweise mit geeigneten Algorithmen zur datenmäßigen Erfassung und Auswertung entsprechender akustischer Merkmale ausgestattet.

Schließlich kann die oder eine alternative bzw. ergänzende Erfassungseinrichtung als biometrische Erfassungseinrichtung, insbesondere als Fingerabdruckscaneinrichtung, ausgebildet sein oder eine solche umfassen. Die biometrische Erfassungseinrichtung ist zur Erfassung wenigstens eines Körpermerkmals eines potentiellen Benutzers der Vorrichtung eingerichtet. Körpermerkmale eines Benutzers der Vorrichtung sind insbesondere biometrisch erfassbare Merkmale des Benutzers der Vorrichtung. Konkret kann es sich bei entsprechenden Merkmalen z. B. um Merkmale der Finger, insbesondere einen Fingerabdruck, des Benutzers handeln. Die Erfassungseinrichtung bzw. die Autorisierungseinrichtung ist typischerweise mit geeigneten Algorithmen zur datenmäßigen Erfassung und Auswertung entsprechender Körpermerkmale ausgestattet.

Für alle Ausführungsformen der Erfassungseinrichtung gilt, dass die Erfassungseinrichtung zweckmäßig eingerichtet ist, eine Erfassung wenigstens eines akustischen Merkmals, optischen Merkmals oder Körpermerkmals eines potentiellen Benutzers der Vorrichtung, automatisch bei Erfassen eines sich an die Vorrichtung annähernden bzw. angenäherten potentiellen Benutzers der Vorrichtung durchzuführen. Dies ermöglicht automatisierbare bzw. automatische Erfassungsvorgänge jeweiliger benutzerseitiger Merkmale und somit automatisierbare bzw. automatische Autorisierungsvorgänge jeweiliger Benutzer. Zur Erfassung eines sich an die Vorrichtung annähernden bzw. eines an die Vorrichtung angenäherten potentiellen Benutzers der Vorrichtung kann die Erfassungseinrichtung geeignete Erfassungselemente, d. h. z. B. Näherungssensoren, umfassen. Selbstverständlich kann die Vorrichtung zur Erfassung eines sich an die Vorrichtung annähernden bzw. eines an die Vorrichtung angenäherten potentiellen Benutzers der Vorrichtung auch eine gesonderte, mit entsprechenden Erfassungselementen ausgestattete Erfassungseinrichtung umfassen.

Für alle Ausführungsformen der Erfassungseinrichtung gilt weiter, dass die Erfassungseinrichtung an oder in einem vorrichtungsseitigen Gehäuse, insbesondere im Bereich, insbesondere oberhalb, einer einen Einblick in eine Prozesskammer der Vorrichtung ermöglichenden Sichtscheibe angeordnet oder ausgebildet sein kann. Die Erfassungseinrichtung kann sonach an einem oder in ein vorrichtungsseitiges Gehäuse, insbesondere einem Rahmenelement des Gehäuses, integriert angeordnet oder ausgebildet sein. Alternativ oder ergänzend kann die oder eine weitere Erfassungseinrichtung an oder in einer an einem vorrichtungsseitigen Gehäuse angeordneten oder ausgebildeten vorrichtungsseitigen Benutzerschnittstelle, insbesondere einer Touch-Displayeinrichtung, angeordnet oder ausgebildet sein. Die oder eine weitere Erfassungseinrichtung kann sonach alternativ oder ergänzend auch an einer oder in eine Benutzerschnittstelle, d. h. z. B. eine Touch-Displayeinrichtung, insbesondere einem Rahmenelement der Touch-Displayeinrichtung, angeordnet oder ausgebildet sein.

Die Vorrichtung umfasst zweckmäßig eine der Autorisierungseinrichtung zuordenbare bzw. zugeordnete, auch als Datenspeicher zu bezeichnende bzw. zu erachtende Speichereinrichtung. In der hard- und/oder softwaremäßig implementierten Speichereinrichtung können im Sinne einer Benutzerdatenbank Benutzerdaten autorisierter Benutzer hinterlegt sein. Die Benutzerdaten können bestimmte akustische Merkmale, optische Merkmale oder Körpermerkmale von zur Benutzung wenigstens eines Betriebszustands der Vorrichtung autorisierten Benutzern beinhalten bzw. beschreiben. Selbstverständlich können entsprechende Benutzerdaten weitere, insbesondere im Zusammenhang mit der Autorisierung bzw. der nach erfolgreicher Autorisierung möglichen Nutzung von Betriebszuständen der Vorrichtung relevante, Daten des jeweiligen Benutzers, d. h. z. B. Name, Stellung im Betrieb, Betriebszugehörigkeit, beinhalten bzw. beschreiben. Die in der Speichereinrichtung hinterlegten Benutzerdaten ermöglichen sonach im Rahmen eines Autorisierungsvorgangs einen Abgleich erfasster Merkmale eines potentiellen Benutzers der Vorrichtung mit datenmäßig hinterlegten Merkmalen autorisierter Benutzer der Vorrichtung.

In der oder einer weiteren der Autorisierungseinrichtung zuordenbaren bzw. zugeordneten Speichereinrichtung können Benutzerprofildaten autorisierter Benutzer der Vorrichtung hinterlegt sein. Die Benutzerprofildaten können die für jeweilige zur Benutzung wenigstens eines Betriebszustands der Vorrichtung autorisierten Benutzer jeweils freigegebenen Betriebszustände der Vorrichtung beinhalten bzw. beschreiben. Mit anderen Worten beinhalten bzw. beschreiben die Benutzerprofildaten die den jeweiligen autorisierten Benutzern zugeordneten Nutzungsberechtigungen jeweiliger Betriebszustände der Vorrichtung. Die in der Speichereinrichtung hinterlegten Benutzerprofildaten ermöglichen nach erfolgreicher Autorisierung eines Benutzers sonach eine automatisierbare bzw. automatische Auswahl und Anwendung der dem jeweiligen autorisierten Benutzer zugeordneten Benutzerprofildaten.

Die Vorrichtung umfasst zweckmäßig eine der Autorisierungseinrichtung sowie der oder den Speichereinrichtung(en) zuordenbare bzw. zugeordnete Steuereinrichtung. Die hard- und/oder softwaremäßig implementierte Steuereinrichtung ist eingerichtet, eine in Abhängigkeit einer seitens der Erfassungseinrichtung erzeugten, wenigstens ein jeweiliges erfasstes akustisches Merkmal, optisches Merkmal oder Körpermerkmal eines potentiellen Benutzers der Vorrichtung beschreibende Erfassungsinformation mit in der Speichereinrichtung hinterlegten Benutzerdaten zu vergleichen und eine ein entsprechendes Vergleichsergebnis beschreibende Vergleichsergebnisinformation zu erzeugen.

Die Steuereinrichtung kann bei einer ein positives Vergleichsergebnis beschreibenden Vergleichsergebnisinformation, d. h. bei erfolgreicher Autorisierung eines Benutzers der Vorrichtung, eingerichtet sein, dem jeweiligen autorisierten Benutzer zugeordnete Benutzerprofildaten der Steuerung des Betriebs der Vorrichtung zugrunde zu legen.

Bei einer ein negatives Vergleichsergebnis beschreibenden Vergleichsergebnisinformation, d. h. bei, gegebenenfalls mehrfach, nicht erfolgreicher Autorisierung eines potentiellen Benutzers der Vorrichtung, kann die Steuereinrichtung eingerichtet sein, die Vergleichsergebnisinformation an eine den Betrieb der Vorrichtung sowie gegebenenfalls den Betrieb weiterer Vorrichtungen als jeweilige Bestandteile einer Anlage zur additiven Herstellung dreidimensionaler Objekte überwachende Überwachungseinrichtung zu übertragen. Die Vorrichtung umfasst hierfür eine der Steuereinrichtung zuordenbare bzw. zugeordnete Datenübertragungseinrichtung, welche eine kabelgebundene oder kabellose, gegebenenfalls verschlüsselte, Übertragung von Daten, d. h. insbesondere auch entsprechender Vergleichsergebnisinformationen, an einen Übertragungspartner, d. h. insbesondere eine entsprechende Überwachungseinrichtung, zu übertragen. Selbstverständlich können in analoger Weise auch ein positives Vergleichsergebnis beschreibende Vergleichsergebnisinformationen an einen Übertragungspartner, d. h. insbesondere eine entsprechende Überwachungseinrichtung, übertragen werden.

Neben der Vorrichtung betrifft die Erfindung auch ein Verfahren zum Betrieb einer Vorrichtung zur additiven Herstellung dreidimensionaler Objekte durch sukzessives schichtweises selektives Belichten und damit einhergehendes sukzessives schichtweises selektives Verfestigen von Baumaterialschichten aus einem vermittels eines Energiestrahls verfestigbaren Baumaterial. Das Verfahren zeichnet dadurch aus, dass der Betrieb der Vorrichtung auf Grundlage einer vermittels einer Autorisierungseinrichtung, welche zur Autorisierung wenigstens eines Benutzers der Vorrichtung zur Nutzung wenigstens eines Betriebszustands der Vorrichtung eingerichtet ist, wobei die Autorisierungseinrichtung wenigstens eine Erfassungseinrichtung umfasst, welche zur Erfassung wenigstens eines akustischen Merkmals, optischen Merkmals oder Körpermerkmals eines potentiellen Benutzers der Vorrichtung eingerichtet ist, erfolgenden Autorisierung eines potentiellen Benutzers der Vorrichtung gesteuert wird. Das Verfahren lässt sich insbesondere mit einer wie beschriebenen Vorrichtung durchführen; sämtliche Ausführungen im Zusammenhang mit der Vorrichtung gelten sonach analog für das Verfahren.

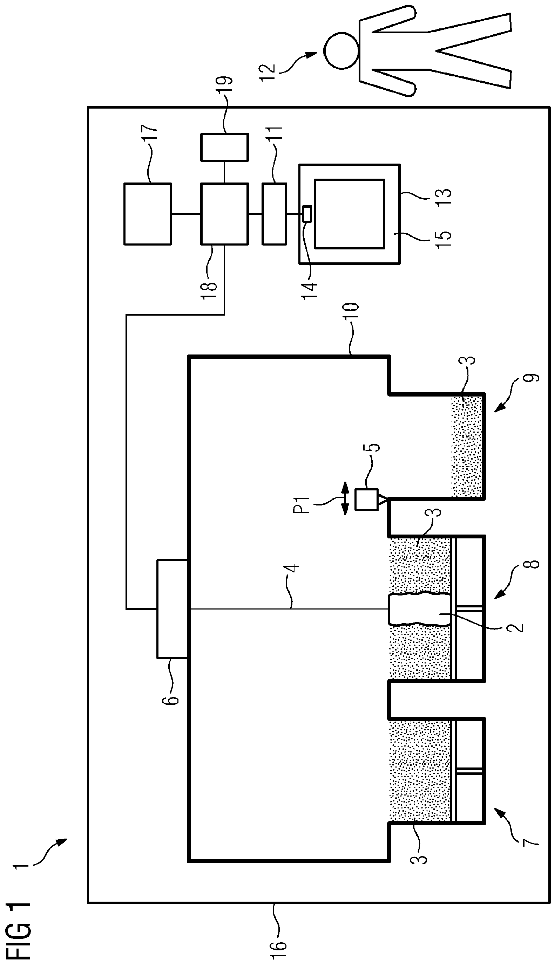

Die Erfindung ist anhand von Ausführungsbeispielen in den Zeichnungsfiguren näher erläutert. Dabei zeigt die einzige Fig. eine Prinzipdarstellung einer Vorrichtung gemäß einem Ausführungsbeispiel.

Die Fig. zeigt eine Prinzipdarstellung einer Vorrichtung 1 gemäß einem Ausführungsbeispiel.

Die Vorrichtung 1 dient der additiven Herstellung dreidimensionaler Objekte 2, d. h. insbesondere technischer Bauteile bzw. technischer Bauteilgruppen, durch sukzessives schichtweises selektives Belichten und damit einhergehendes sukzessives schichtweises selektives Verfestigen von Baumaterialschichten aus einem verfestigbaren Baumaterial 3, d. h. z. B. eines Metallpulvers, vermittels eines Energiestrahls 4, d. h. insbesondere eines Laserstrahls. Die selektive Verfestigung jeweiliger zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2 und können beispielsweise "geslicte" CAD-Daten des herzustellenden Objekts 2 beinhalten. Die Vorrichtung 1 kann z. B. als Laser-CUSINGO-Vorrichtung, d. h. als Vorrichtung zur Durchführung selektiver Laserschmelzverfahren (SLM-Verfahren), ausgebildet sein.

Die Vorrichtung 1 umfasst die zur Durchführung additiver Bauvorgänge erforderlichen Funktionskomponenten; in der Fig. ist beispielsweise eine Beschichtungseinrichtung 5 und eine Belichtungseinrichtung 6 gezeigt. Die Beschichtungseinrichtung 5 ist zur Ausbildung selektiv zu belichtender bzw. selektiv zu verfestigender Baumaterialschichten in einer Bauebene bzw. einem Baufeld der Vorrichtung 1 eingerichtet und umfasst hierzu ein - wie durch den Doppelpfeil P1 angedeutet - relativ zu einer Bauebene bzw. einem Baufeld der Vorrichtung 1 bewegbar gelagertes, insbesondere klingenartiges bzw. -förmiges, Beschichtungselement (nicht näher bezeichnet). Die Belichtungseinrichtung 6 ist zur selektiven Belichtung selektiv zu verfestigender Baumaterialschichten in der Bauebene bzw. dem Baufeld der Vorrichtung 1 eingerichtet und umfasst hierfür eine Strahlerzeugungseinrichtung (nicht gezeigt), welche zur Erzeugung des Energiestrahls 4 eingerichtet ist, gegebenenfalls eine Strahlablenkeinrichtung (nicht gezeigt), welche zur Ablenkung des von der Strahlerzeugungseinrichtung erzeugten Energiestrahls 4 auf einen zu belichtenden Bereich einer selektiv zu verfestigenden Baumaterialschicht eingerichtet ist, sowie diverse optische Elemente, wie z. B. Filterelemente, Objektivelemente, Linsenelemente, etc.

In der Fig. ist ferner ein Dosiermodul 7, ein Baumodul 8 und ein Überlaufmodul 9 dargestellt, welche an einen unteren Bereich einer intertisierbaren Prozesskammer 10 der Vorrichtung 1 angedockt sind. Die genannten Module können auch einen unteren Bereich der Prozesskammer 14 der Vorrichtung 1 bilden.

Die Vorrichtung 1 umfasst eine hard- und/oder softwaremäßig implementierte Autorisierungseinrichtung 11, welche zur Autorisierung wenigstens eines Benutzers 12 der Vorrichtung 1 zur Nutzung wenigstens eines Betriebszustands der Vorrichtung 1 eingerichtet ist. Die Autorisierungseinrichtung 11 ist sonach eingerichtet, Autorisierungsvorgänge durchzuführen, welche eine Autorisierung eines Benutzers 12 ermöglichen, sodass dieser - nach erfolgreicher Autorisierung - wenigstens einen Betriebszustand der Vorrichtung 1 nutzen kann.

Bei einem Betriebszustand der Vorrichtung 1 kann es sich um die Inbetriebnahme der Vorrichtung 1, d. h. um ein Einschalten der Vorrichtung 1 oder einer Funktionskomponente der Vorrichtung 1, d. h. z. B. der Belichtungseinrichtung 6, die Außerbetriebnahme der Vorrichtung 1, d. h. um ein Ausschalten der Vorrichtung 1 oder einer Funktionskomponente der Vorrichtung 1, d. h. z. B. der Belichtungseinrichtung 6, oder um einen bestimmten Betriebsmodus der in Betrieb genommenen Vorrichtung 1 handeln. Bei einem Betriebsmodus der Vorrichtung 1 kann es sich z. B. um einen Demonstrations- bzw. Simulationsmodus, in welchem die Durchführung additiver Bauvorgänge nur demonstriert bzw. simuliert wird, additive Bauvorgänge jedoch tatsächlich nicht durchgeführt werden, einen Baumodus, in welchem additive Bauvorgänge tatsächlich durchgeführt werden, oder um einen Programmiermodus, in welchem wenigstens ein Betriebsparameter, d. h. z. B. ein Belichtungsparameter, wie etwa die Energiestrahlintensität, im Zusammenhang mit der Durchführung additiver Bauvorgänge programmierbar ist, handeln.

Die Autorisierungseinrichtung 11 umfasst eine hard- und/oder softwaremäßig implementierte Erfassungseinrichtung 14, welche zur Erfassung wenigstens eines akustischen Merkmals, optischen Merkmals oder Körpermerkmals eines potentiellen Benutzers 12 der Vorrichtung 1 eingerichtet ist. Eine Autorisierung eines Benutzers 12 erfolgt sonach über die automatisierbare bzw. automatische Erfassung akustischer Merkmale und/oder optischer Merkmale und/oder weiterer Körpermerkmale des potentiellen Benutzers 12 der Vorrichtung 1. Ein (aktives) benutzerseitiges Handeln, d. h. insbesondere eine Eingabe eines bestimmten Kennworts an einer vorrichtungsseitigen Benutzerschnittstelle 13, ist nicht notwendig. Ein potentieller Benutzer 12 der Vorrichtung 1 hat im Rahmen eines Autorisierungsvorgangs typischerweise keinen bzw., wenn überhaupt im Zusammenhang mit der Erfassung von Körpermerkmalen, einen im Vergleich nur minimalen (physikalischen) Kontakt mit der Vorrichtung 1; der potentielle Benutzer 12 der Vorrichtung 1 kommt im Rahmen eines Autorisierungsvorgangs sonach nicht bzw. kaum in Kontakt mit Baumaterial 3.

Die Erfassungseinrichtung 14 ist in dem in der Fig. gezeigten Ausführungsbeispiel als optische Erfassungseinrichtung, d. h. als Bildaufnahmeeinrichtung, insbesondere als Kameraeinrichtung, ausgebildet und zur Erfassung wenigstens eines optischen Merkmals eines potentiellen Benutzers 12 der Vorrichtung 1 eingerichtet. Optische Merkmale eines potentiellen Benutzers 12 der Vorrichtung 1 sind insbesondere optisch erfassbare Merkmale bzw. eine optisch erfassbare Anordnung bestimmter optisch erfassbarer Merkmale des potentiellen Benutzers 12 der Vorrichtung 1. Konkret kann es sich bei entsprechenden Merkmalen z. B. um Merkmale des Gesichts des Benutzers 12 handeln. Die Erfassungseinrichtung 14 bzw. die Autorisierungseinrichtung 11 ist mit geeigneten Algorithmen zur datenmäßigen Erfassung und Auswertung entsprechender optischer Merkmale ausgestattet.

Die Erfassungseinrichtung 14 ist in dem in der Fig. gezeigten Ausführungsbeispiel an bzw. in der Benutzerschnittstelle 13, bei welcher es sich z. B. um eine Touch-Displayeinrichtung handelt, d. h. insbesondere an bzw. in einem Rahmenelement 15 der Benutzerschnittstelle 13, angeordnet bzw. ausgebildet. Alternativ hierzu wäre z. B. auch eine Anordnung oder Ausbildung an oder in einem vorrichtungsseitigen (äußeren) Gehäuse 16, insbesondere im Bereich oberhalb einer einen Einblick in die Prozesskammer 10 der Vorrichtung 1 ermöglichenden Sichtscheibe (nicht gezeigt) möglich. Die Erfassungseinrichtung 14 könnte sonach auch an einem oder in das vorrichtungsseitige Gehäuse 16, insbesondere einem Rahmenelement (nicht näher bezeichnet) des Gehäuses 16, integriert angeordnet oder ausgebildet sein.

Die Erfassungseinrichtung 14 ist eingerichtet, eine Erfassung wenigstens eines akustischen Merkmals, optischen Merkmals oder Körpermerkmals eines potentiellen Benutzers 12 der Vorrichtung 1, automatisch bei Erfassen eines sich an die Vorrichtung 1 annähernden bzw. angenäherten potentiellen Benutzers 12 der Vorrichtung 1 durchzuführen. Zur Erfassung eines sich an die Vorrichtung 1 annähernden bzw. eines an die Vorrichtung 1 angenäherten potentiellen Benutzers 12 der Vorrichtung 1 kann die Erfassungseinrichtung 14 geeignete Erfassungselemente (nicht gezeigt), d. h. z. B. Näherungssensoren, umfassen. Zur Erfassung eines sich an die Vorrichtung 1 annähernden bzw. eines an die Vorrichtung 1 angenäherten potentiellen Benutzers 12 der Vorrichtung 1 könnte die Vorrichtung 1 selbstverständlich auch eine gesonderte, mit entsprechenden Erfassungselementen ausgestattete Erfassungseinrichtung (nicht gezeigt) umfassen.

In der Fig. ist ferner eine der Autorisierungseinrichtung 11 zugeordnete, auch als Datenspeicher zu bezeichnende bzw. zu erachtende Speichereinrichtung 17 gezeigt. In der hard- und/oder softwaremäßig implementierten Speichereinrichtung 17 sind Benutzerdaten autorisierter Benutzer 12 hinterlegt. Die Benutzerdaten können bestimmte akustische Merkmale, optische Merkmale oder Körpermerkmale von zur Benutzung wenigstens eines Betriebszustands der Vorrichtung 1 autorisierten Benutzern 12 beinhalten bzw. beschreiben. Selbstverständlich können entsprechende Benutzerdaten weitere, insbesondere im Zusammenhang mit der Autorisierung bzw. der nach erfolgreicher Autorisierung möglichen Nutzung von Betriebszuständen der Vorrichtung 1 relevante, Daten des jeweiligen Benutzers 12, d. h. z. B. Name, Stellung im Betrieb, Betriebszugehörigkeit, beinhalten bzw. beschreiben. Die in der Speichereinrichtung 17 hinterlegten Benutzerdaten ermöglichen im Rahmen eines Autorisierungsvorgangs einen Abgleich erfasster Merkmale eines potentiellen Benutzers 12 der Vorrichtung 1 mit datenmäßig hinterlegten Merkmalen autorisierter Benutzer 12 der Vorrichtung 1.

In der Speichereinrichtung 17 können zudem Benutzerprofildaten autorisierter Benutzer 12 der Vorrichtung 1 hinterlegt sein. Die Benutzerprofildaten beinhalten bzw. beschreiben die für jeweilige zur Benutzung wenigstens eines Betriebszustands der Vorrichtung 1 autorisierten Benutzer 12 jeweils freigegebenen Betriebszustände der Vorrichtung 1. Die in der Speichereinrichtung 17 hinterlegten Benutzerprofildaten ermöglichen nach erfolgreicher Autorisierung eines Benutzers 12 sonach eine automatisierbare bzw. automatische Auswahl und Anwendung der dem jeweiligen autorisierten Benutzer 12 zugeordneten Benutzerprofildaten.

In der Fig. ist weiter eine der Autorisierungseinrichtung 11 sowie der Speichereinrichtung 17 zugeordnete Steuereinrichtung 18 gezeigt. Die hard- und/oder softwaremäßig implementierte Steuereinrichtung 18 ist eingerichtet, eine in Abhängigkeit einer seitens der Erfassungseinrichtung 14 erzeugten, wenigstens ein jeweiliges erfasstes akustisches Merkmal, optisches Merkmal oder Körpermerkmal eines potentiellen Benutzers 12 der Vorrichtung 1 beschreibende Erfassungsinformation mit in der Speichereinrichtung 17 hinterlegten Benutzerdaten zu vergleichen und eine ein entsprechendes Vergleichsergebnis beschreibende Vergleichsergebnisinformation zu erzeugen.

Die Steuereinrichtung 18 kann bei einer ein positives Vergleichsergebnis beschreibenden Vergleichsergebnisinformation, d. h. bei erfolgreicher Autorisierung eines Benutzers 12 der Vorrichtung 1, eingerichtet sein, dem jeweiligen autorisierten Benutzer 12 zugeordnete Benutzerprofildaten der Steuerung des Betriebs der Vorrichtung 1 zugrunde zu legen. Bei einer ein negatives Vergleichsergebnis beschreibenden Vergleichsergebnisinformation, d. h. bei, gegebenenfalls mehrfach, nicht erfolgreicher Autorisierung eines potentiellen Benutzers 12 der Vorrichtung 1, kann die Steuereinrichtung 18 eingerichtet sein, die Vergleichsergebnisinformation an eine den Betrieb der Vorrichtung 1 sowie gegebenenfalls den Betrieb weiterer Vorrichtungen (nicht gezeigt) als jeweilige Bestandteile einer Anlage (nicht gezeigt) zur additiven Herstellung dreidimensionaler Objekte 2 überwachende Überwachungseinrichtung (nicht gezeigt) zu übertragen. Die Vorrichtung 1 umfasst hierfür (optional) eine der Steuereinrichtung 18 zugeordnete Datenübertragungseinrichtung 19, welche eine kabelgebundene oder kabellose, gegebenenfalls verschlüsselte, Übertragung von Daten, d. h. insbesondere entsprechender Vergleichsergebnisinformationen, an einen Übertragungspartner, d. h. insbesondere eine entsprechende Überwachungseinrichtung, zu übertragen. Selbstverständlich können in analoger Weise auch ein positives Vergleichsergebnis beschreibende Vergleichsergebnisinformationen an einen Übertragungspartner, d. h. insbesondere eine entsprechende Überwachungseinrichtung, übertragen werden.

Wenngleich in dem in der Fig. gezeigten Ausführungsbeispiel eine optische Erfassungseinrichtung gezeigt ist, kann die oder eine alternative bzw. ergänzende Erfassungseinrichtung 14 als akustische Erfassungseinrichtung, insbesondere als Tonaufnahmeeinrichtung, vorzugsweise als Mikrophoneinrichtung, ausgebildet sein. Eine akustische Erfassungseinrichtung ist zur Erfassung wenigstens eines akustischen Merkmals eines potentiellen Benutzers 12 der Vorrichtung 1 eingerichtet. Akustische Merkmale eines potentiellen Benutzers 12 der Vorrichtung 1 sind insbesondere akustisch erfassbare Merkmale des potentiellen Benutzers 12 der Vorrichtung 1. Konkret kann es sich bei entsprechenden Merkmalen z. B. um Merkmale der (ausgesprochenen) Sprache, d. h. insbesondere Amplitude, Frequenz, des Benutzers 12 handeln. Die Erfassungseinrichtung bzw. die Autorisierungseinrichtung ist typischerweise mit geeigneten Algorithmen zur datenmäßigen Erfassung und Auswertung entsprechender akustischer Merkmale ausgestattet.

Ebenso kann die oder eine alternative bzw. ergänzende Erfassungseinrichtung 14 als biometrische Erfassungseinrichtung, insbesondere als Fingerabdruckscaneinrichtung, ausgebildet sein. Die biometrische Erfassungseinrichtung ist zur Erfassung wenigstens eines Körpermerkmals eines potentiellen Benutzers 12 der Vorrichtung 1 eingerichtet. Körpermerkmale eines Benutzers 12 der Vorrichtung 1 sind insbesondere biometrisch erfassbare Merkmale des Benutzers 12 der Vorrichtung 1. Konkret kann es sich bei entsprechenden Merkmalen z. B. um Merkmale der Finger, insbesondere einen Fingerabdruck, des Benutzers 12 handeln. Die Erfassungseinrichtung bzw. die Autorisierungseinrichtung ist typischerweise mit geeigneten Algorithmen zur datenmäßigen Erfassung und Auswertung entsprechender Körpermerkmale ausgestattet.

Mit der in dem in der Fig. gezeigten Ausführungsbeispiel gezeigten Vorrichtung 1 lässt sich ein Verfahren zum Betrieb einer Vorrichtung 1 zur additiven Herstellung dreidimensionaler Objekte 2 durch sukzessives schichtweises selektives Belichten und damit einhergehendes sukzessives schichtweises selektives Verfestigen von Baumaterialschichten aus einem vermittels eines Energiestrahls 4 verfestigbaren Baumaterial 3 implementieren. Das Verfahren zeichnet dadurch aus, dass der Betrieb der Vorrichtung 1 auf Grundlage einer vermittels der Autorisierungseinrichtung 11, welche zur Autorisierung wenigstens eines potentiellen Benutzers 12 der Vorrichtung 1 zur Nutzung wenigstens eines Betriebszustands der Vorrichtung 1 eingerichtet ist, wobei die Autorisierungseinrichtung 11 eine Erfassungseinrichtung 14 umfasst, welche zur Erfassung wenigstens eines akustischen Merkmals, optischen Merkmals oder Körpermerkmals eines potentiellen 12 Benutzers der Vorrichtung 1 eingerichtet ist, erfolgenden Autorisierung eines potentiellen Benutzers 12 der Vorrichtung 1 gesteuert wird.

## Patentansprüche

1. Vorrichtung (1) zur additiven Herstellung dreidimensionaler Objekte (2) durch sukzessives schichtweises selektives Belichten und damit einhergehendes sukzessives schichtweises selektives Verfestigen von Baumaterialschichten aus einem vermittels eines Energiestrahls (4) verfestigbaren Baumaterial (3), umfassend eine Autorisierungseinrichtung (11), welche zur Autorisierung wenigstens eines Benutzers (12) der Vorrichtung (1) zur Nutzung wenigstens eines Betriebszustands der Vorrichtung (1) eingerichtet ist, **dadurch gekennzeichnet, dass** die Autorisierungseinrichtung (11) wenigstens eine Erfassungseinrichtung (14) umfasst, welche zur Erfassung wenigstens eines akustischen Merkmals, optischen Merkmals oder Körpermerkmals eines potentiellen Benutzers (12) der Vorrichtung (1) eingerichtet ist.

2. Vorrichtung nach Anspruch 1, **gekennzeichnet durch** eine Speichereinrichtung (17), in welcher Benutzerdaten hinterlegt sind, welche bestimmte akustische Merkmale, optische Merkmale oder Körpermerkmale von zur Benutzung wenigstens eines Betriebszustands der Vorrichtung (1) autorisierten Benutzern (12) beschreiben.

3. Vorrichtung nach Anspruch 1 oder 2, **gekennzeichnet durch** die oder eine Speichereinrichtung (17), in welcher Benutzerprofildaten hinterlegt sind, welche die für jeweilige zur Benutzung wenigstens eines Betriebszustands der Vorrichtung (1) autorisierten Benutzer (12) jeweils freigegebenen Betriebszustände der Vorrichtung (1) beschreiben.

4. Vorrichtung nach Anspruch 2 oder 3, **gekennzeichnet durch** eine Steuereinrichtung (18), welche eingerichtet ist, eine in Abhängigkeit einer seitens der Erfassungseinrichtung (14) erzeugten, wenigstens ein jeweiliges erfasstes akustisches Merkmal, optisches Merkmal oder Körpermerkmal eines potentiellen Benutzers (12) der Vorrichtung (1) beschreibende Erfassungsinformation mit in der Speichereinrichtung (17) hinterlegten Benutzerdaten zu vergleichen und eine ein entsprechendes Vergleichsergebnis beschreibende Vergleichsergebnisinformation zu erzeugen.

5. Vorrichtung nach Anspruch 4, **dadurch gekennzeichnet, dass** die Steuereinrichtung (18(bei einer ein positives Vergleichsergebnis beschreibenden Vergleichsergebnisinformation eingerichtet ist, dem jeweiligen autorisierten Benutzer (12) zugeordnete Benutzerprofildaten der Steuerung des Betriebs der Vorrichtung (1) zugrunde zu legen.

6. Vorrichtung nach Anspruch 4 oder 5, **dadurch gekennzeichnet, dass** die Steuereinrichtung (18) bei einer ein negatives Vergleichsergebnis beschreibenden Vergleichsergebnisinformation eingerichtet ist, die Vergleichsergebnisinformation an eine den Betrieb der Vorrichtung (1) sowie gegebenenfalls den Betrieb weiterer Vorrichtungen überwachende Überwachungseinrichtung zu übertragen.

7. Vorrichtung nach einem der vorhergehenden Ansprüche, **dadurch gekennzeichnet, dass** die Erfassungseinrichtung (14) als optische Erfassungseinrichtung, insbesondere als Bildaufnahmeeinrichtung, ausgebildet ist oder eine solche umfasst, welche zur Erfassung wenigstens eines optischen Merkmals eines potentiellen Benutzers (12) der Vorrichtung (1) eingerichtet ist, oder die Erfassungseinrichtung (14) als akustische Erfassungseinrichtung, insbesondere als Tonaufnahmeeinrichtung, ausgebildet ist oder eine solche umfasst, welche zur Erfassung wenigstens eines akustischen Merkmals eines potentiellen Benutzers (12) der Vorrichtung (1) eingerichtet ist, oder
die Erfassungseinrichtung (14) als biometrische Erfassungseinrichtung, insbesondere als Fingerabdruckscaneinrichtung, ausgebildet ist oder eine solche umfasst, welche zur Erfassung wenigstens eines Körpermerkmals eines Benutzers (12) der Vorrichtung (1) eingerichtet ist.

8. Vorrichtung nach einem der vorhergehenden Ansprüche, **dadurch gekennzeichnet, dass** die Erfassungseinrichtung (14) eingerichtet ist, eine Erfassung wenigstens eines akustischen Merkmals, optischen Merkmals oder Körpermerkmals eines potentiellen Benutzers (12) der Vorrichtung (1), automatisch bei Erfassen eines sich an die Vorrichtung (1) annähernden potentiellen Benutzers (12) der Vorrichtung (1) oder eines an die Vorrichtung (1) angenäherten potentiellen Benutzers (12) der Vorrichtung (1) durchzuführen.

9. Vorrichtung nach einem der vorhergehenden Ansprüche, **dadurch gekennzeichnet, dass** die oder eine Erfassungseinrichtung (14) an oder in einem vorrichtungsseitigen Gehäuse (16), insbesondere im Bereich, insbesondere oberhalb, einer einen Einblick in eine Prozesskammer (10) der Vorrichtung (1) ermöglichenden Sichtscheibe angeordnet oder ausgebildet ist, oder
die Erfassungseinrichtung (14) an oder in einer an einem vorrichtungsseitigen Gehäuse (16) angeordneten oder ausgebildeten vorrichtungsseitigen Benutzerschnittstelle (13), insbesondere einer Touch-Displayeinrichtung, angeordnet oder ausgebildet ist.

10. Vorrichtung nach einem der vorhergehenden Ansprüche, **dadurch gekennzeichnet, dass** ein Betriebszustand der Vorrichtung (1) die Inbetriebnahme der Vorrichtung (1), die Außerbetriebnahme (1) der Vorrichtung (1) oder ein bestimmter Betriebsmodus der in Betrieb genommenen Vorrichtung (1), insbesondere ein Demonstrations- bzw. Simulationsmodus, ein Baumodus oder ein Programmiermodus, ist.

11. Verfahren zum Betrieb einer Vorrichtung (1) zur additiven Herstellung dreidimensionaler Objekte (3) durch sukzessives schichtweises selektives Belichten und damit einhergehendes sukzessives schichtweises selektives Verfestigen von Baumaterialschichten aus einem vermittels eines Energiestrahls (4) verfestigbaren Baumaterial (3), insbesondere einer Vorrichtung (1) nach einem der vorhergehenden Ansprüche, **dadurch gekennzeichnet, dass** der Betrieb der Vorrichtung (1) auf Grundlage einer vermittels einer Autorisierungseinrichtung (11), welche zur Autorisierung wenigstens eines Benutzers der Vorrichtung (1) zur Nutzung wenigstens eines Betriebszustands der Vorrichtung (1) eingerichtet ist, wobei die Autorisierungseinrichtung (11) wenigstens eine Erfassungseinrichtung (14) umfasst, welche zur Erfassung wenigstens eines akustischen Merkmals, optischen Merkmals oder Körpermerkmals eines potentiellen Benutzers (12) der Vorrichtung (1) eingerichtet ist, erfolgenden Autorisierung eines potentiellen Benutzers (12) der Vorrichtung (1) gesteuert wird.
